# FASCICULE DE BREVET EUROPEEN

(11) **EP 0 761 988 B1**
(45) Date de publication et mention de la délivrance du brevet: **12.04.2000**
(21) Numéro de dépôt: 96401883.2
(22) Date de dépôt: 03.09.1996
(51) Int. Cl.: F16B 9/02

(54) **Dispositif de fixation rapide d'une pièce sur une embase, en particulier d'une électrovanne de machine à laver**
Vorrichtung zur schnellen Befestigung eines Teils, insbesondere eines Elektromagnetventils einer Waschmaschine, auf einer Trägerplatte
Device for quickly fastening an element, especially a solenoid valve of a washing machine, onto a holding plate

(30) Priorité: 05.09.1995 FR 9510392
(43) Date de publication de la demande: 12.03.1997
(73) Titulaire: ESSWEIN S.A., 85000 la Roche sur Yon (FR)
(72) Inventeur: Preaud, Freddy, 92402 Courbevoie Cedex (FR)
(74) Mandataire: Chaverneff, Vladimir

(56) Documents cités:
- DE-B- 1 575 094
- DE-C- 717 067
- FR-A- 2 571 447
- GB-A- 488 161
- GB-A- 814 374

## Description

La présente invention se rapporte à un dispositif de fixation rapide d'une pièce sur une embase, en particulier d'une électrovanne de machine à laver.

Une machine à laver le linge ou la vaisselle comporte, sur son circuit d'arrivée d'eau, un corps d'électrovannes formant un bloc présentant un embout tubulaire qui est raccordé à la conduite d'arrivée d'eau et un autre embout qui est raccordé à des conduites menant à différents endroits de la machine nécessitant une alimentation en eau.

Habituellement, dans les machines connues, ce corps d'électrovannes est fixé au châssis de la machine, ou sur une pièce-support rapportée sur ce châssis, soit par emmanchement à force dans une découpe formée dans une bride en tôle qui doit être vissée sur le châssis ou la pièce-support, soit par vissage directement sur le châssis ou la pièce-support. De tels modes de fixation nécessitent, dans le cas de fabrications en grandes séries, l'utilisation d'un outil de montage spécial, et la mise en place du corps nécessite un effort important, ce qui présente des risques de coupures des conduites reliées à ce corps. De plus, lors de l'utilisation de la machine, il peut être nécessaire de démonter et remonter le corps d'électrovannes pour le réparer ou le remplacer, ce qui peut détériorer son dispositif de fixation.

Le document DE-A-1 575 094 divulgue un dispositif selon le préambule de la revendication 1. La partie contourée de l'axe avec la rainure décrite correspond à la double collerette (5,18) comme expliqué ci-dessous.

La présente invention a pour objet un dispositif de fixation d'une pièce, telle qu'un corps d'électrovannes, sur une embase telle que le châssis d'une machine, dispositif facilitant le montage de la pièce sans l'aide d'outil de montage spécifique, et permettant des démontages et remontages de la pièce sans risque de la détériorer.

Le dispositif de fixation conforme à l'invention comprend une collerette formée sur la pièce et ayant un contour différent du cercle, et une surface intermédiaire de support fixée ou formée sur l'embase, cette surface intermédiaire comportant une ouverture pour le passage de la partie de la pièce se trouvant d'un côté de la collerette, cette ouverture étant entourée d'une empreinte en creux formée dans la face de la surface intermédiaire par laquelle est introduite la pièce à fixer, cette empreinte ayant les mêmes forme et dimensions que la collerette, une bague de blocage en translation de la collerette étant fixée sur la surface intermédiaire et étant en contact avec elle, avec possibilité de rotation limitée autour d'un axe perpendiculaire à cette surface intermédiaire, la bague étant percée d'un trou ayant les mêmes forme et dimensions que la collerette et l'empreinte, ce trou étant en vis-à-vis de l'empreinte pour une des positions angulaires possibles de la bague.

La présente invention sera mieux comprise à la lecture de la description détaillée d'un mode de réalisation, pris à titre d'exemple non limitatif et illustré par le dessin annexé, sur lequel :

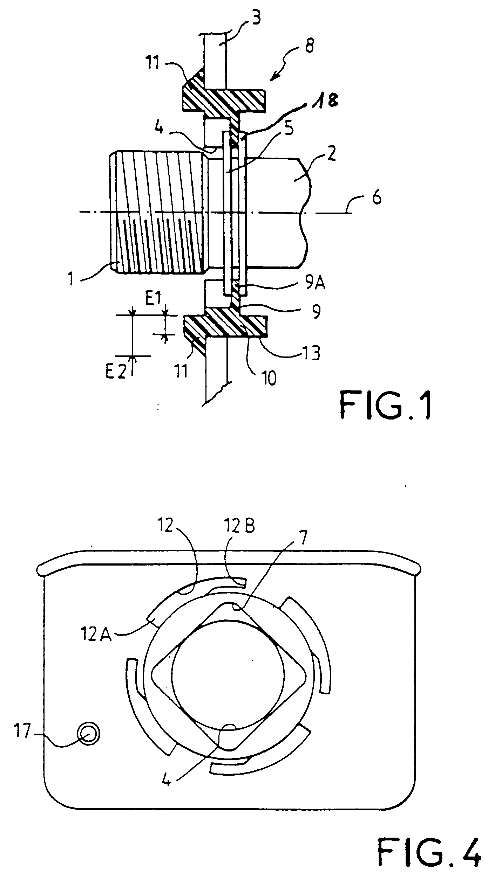

- la figure 1 est une vue de côté en coupe d'un dispositif de fixation conforme à l'invention ;
- la figure 2 est une vue de face du dispositif de la figure 1, en position ouverte de la pièce de blocage,
- la figure 3 est une vue similaire à celle de la figure 3, mais en position fermée de la pièce de blocage, et
- la figure 4 est une vue de face de la cloison de la figure 1, cloison faisant office de support intermédiaire.

L'invention est décrite ci-dessous en référence à la fixation d'un corps d'électrovannes dans une machine à laver, mais il est bien entendu qu'elle n'est pas limitée à une telle application, et qu'elle peut être mise en oeuvre lorsque l'on a à fixer, de façon amovible et rapide, un objet de la façon la plus simple possible, sur une embase.

Le dispositif de l'invention assure la fixation d'un corps d'électrovannes, dont seul l'embout fileté 1 et le début du col 2 reliant l'embout 1 au corps des électrovannes sont représentés sur le dessin, sur une cloison 3. Cette cloison 3 est, par exemple, celle d'un support intermédiaire qui est fixé par encliquetage sur un élément du châssis de la machine comportant le dispositif de l'invention.

La cloison 3 est percée d'une ouverture 4 dont le diamètre est légèrement supérieur au diamètre extérieur de l'embout 1. Sur le col 2, près de l'embout 1, on forme une collerette double 5,18 centrée par rapport à l'axe 6 de l'embout 1 et perpendiculaire à cet axe. Toutefois, il est bien entendu qu'une collerette simple 5 est suffisante pour assurer la fixation (à savoir la partie de collerette la plus proche de l'embout 1, serrée entre la cloison 3 et la bague 8 décrite ci-après). Cette collerette 5 a, dans le présent exemple, un contour carré, mais ce contour pourrait avoir d'autres formes, en particulier des formes polygonales. En cas de nécessité , le contour de la collerette 5 pourrait comporter sur l'un de ses côtés une encoche ou toute autre irrégularité pouvant servir de détrompeur, afin de permettre l'orientation précise de l'embout 1.

On forme sur l'une des faces de la cloison 3, à savoir celle du côté de laquelle est introduit l'embout 1, une empreinte 7. Cette empreinte 7, centrée par rapport à l'axe 6, a les mêmes forme (carrée, dans le cas présent) et dimensions que la collerette 5 (dimensions du contour, et profondeur égale à l'épaisseur de la collerette). Ainsi, la collerette 5 peut venir se loger dans l'empreinte 7 sans jeu, et sans dépasser de la surface environnante de la cloison 3, étant ainsi immobilisée en rotation.

Pour immobiliser en translation la collerette 5 lorsqu'elle est en place dans l'empreinte 7, on utilise une bague 8 enclipsable et à rotation limitée. La bague 8 se compose d'un corps 9 en couronne à la périphérie duquel sont formées plusieurs, par exemple quatre, pattes 10 s'étendant parallèlement à l'axe du corps 9. Le corps 9 a son contour extérieur circulaire et un contour intérieur 9A de même forme (carrée dans le présent exemple) que le contour extérieur de la collerette 5 et de dimensions égales ou légèrement supérieures à celles de la collerette.

Les pattes 10 se terminent par des ergots d'encliquetage 11. Ces pattes 10 passent dans des trous oblongs 12 (à profil en arc de cercle, pratiqués dans la cloison 3 et s'étendant sur un angle d'environ 60°. A l'une de leurs extrémités, dans le cas présent l'extrémité arrière 12 A (considérée dans le sens des aiguilles d'une montre), les trous 12 sont plus larges qu'à leur autre extrémité 12 B. A leur extrémité antérieure 12 B, la largeur des trous 12 est sensiblement égale à l'épaisseur E1 d'une patte 10, tandis qu'à leur extrémité arrière 12A, leur largeur est sensiblement égale à l'épaisseur E1 d'une patte 10 augmentée de l'épaisseur de l'ergot 11 correspondant, soit E2.

Les trous 12 sont pratiqués de telle façon que leur bord périphérique externe soit à la même distance de l'axe 6 que les faces extérieures 13 des pattes 10.

Le montage du dispositif décrit ci-dessus est effectué de la façon suivante :
- on monte la bague 8 sur la cloison 3 par encliquetage des ergots 11 dans les trous 12,
- on oriente la bague 8 de façon à faire coïncider le contour intérieur 9A de cette bague avec l'empreinte 7 de la cloison 3,
- on fait passer dans le trou 4 et le contour intérieur 9A l'embout 1, puis on insère la collerette 5 dans l'empreinte 7,
- et on tourne de 45° la bague 8 (rotation permise par l'extension angulaire des trous 12) pour maintenir en position l'embout 1.

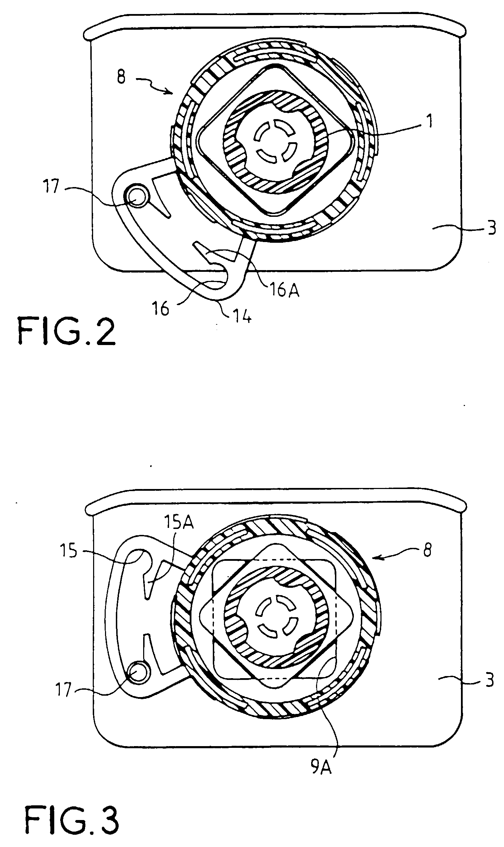

Afin de bloquer en rotation la bague 8, on forme sur sa périphérie un anneau 14 aplati dans le sens radial vers l'axe 6, et qui s'étend angulairement sur un angle légèrement supérieur à l'angle de rotation permis à la bague 8 par les trous 12. On forme aux extrémités (dans le sens périphérique) de l'anneau 14 des encoches 15, 16 en forme de "U" dont les deux branches sont incurvées concentriquement par rapport à l'axe 6, la branche la plus proche de l'axe 6 comportant un ergot, 15A, 16A respectivement, dirigé vers l'autre branche du "U". Les encoches et ergots coopèrent avec un pion 17 formé sur la cloison 3, et disposé de façon à s'encliqueter avec l'un des ergots 15A ou 16A en fin de course de rotation de la bague 8. On définit ainsi deux positions d'arrêt de la bague 8. La première (figure 2) correspondant à l'encliquetage avec l'ergot 15A, est la position d'introduction ou de déblocage de l'embout 1, pour laquelle la découpe carrée de la bague 8 coïncide avec l'empreinte 7. La deuxième position (figure 3) d'arrêt correspond à l'encliquetage avec l'ergot 16A, est la position de blocage de l'embout 1, pour laquelle la bague 8 vient recouvrir partiellement la collerette 5, bloquant ainsi l'embout 1 en translation (selon l'axe 6). Bien entendu, l'anneau 14, les ergots 15A, 16A et le pion 17 peuvent être remplacés par des moyens équivalents d'immobilisation en rotation de la bague 8.

Au lieu d'une collerette 5 à contour carré, on peut former sur l'embout 1 une collerette ayant un contour différent, par exemple polygonal régulier à 3, 5, 6 côtés ou plus ou circulaire tronqué. Dans les cas où l'orientation angulaire de l'embout 1 doit être définie de façon précise, le contour de la collerette 5 peut être un polygone irrégulier, ou bien ce peut être un polygone régulier, tel qu'un carré, dont un des côtés comporte une encoche ou une excroissance. La forme de l'empreinte 7 est, bien entendu la même que celle de la collerette.

Le dispositif de fixation de l'invention est donc très facile à mettre en oeuvre, sans nécessiter aucun outil spécial pour le montage ou le démontage, et il peut être manoeuvré de nombreuses fois sans occasionner aucune détérioration.

## Revendications

1. Dispositif de fixation rapide sur une embase d'une pièce, comprenant une collerette (5) formée sur la pièce (1) et ayant un contour différent d'un cercle, et une surface intermédiaire de support (3) fixée ou formée sur l'embase, cette surface intermédiaire comportant une ouverture (4) pour le passage de la partie de la pièce se trouvant d'un côté de la collerette, une bague (8) de blocage en translation de la collerette étant fixée sur la surface intermédiaire et étant en contact avec elle, la bague étant percée d'un trou (9A) ayant les mêmes forme et dimensions que la collerette, le blocage étant effectué par la rotation limitée de la bague (8) autour d'un axe (6) perpendiculaire à la surface intermédiaire, le trou étant en vis-à-vis de la colerette pour une des positions angulaires possibles de la bague, caractérisé en ce que l'ouverture (4) étant entourée d'une empreinte en creux (7) formée dans la face de la surface intermédiaire par laquelle est introduite la pièce à fixer, cette empreinte ayant les mêmes forme et dimensions que la collerette.

2. Dispositif selon la revendication 1, caractérisé en ce que la collerette, l'empreinte et le trou ont une forme polygonale.

3. Dispositif selon la revendication 2, caractérisé en ce que la forme polygonale est un carré.

4. Dispositif selon l'une des revendications précédentes, caractérisé en ce que la bague de blocage coopère avec des moyens (15A, 16A, 17) verrouillant en rotation en deux positions angulaires différentes, la première étant celle pour laquelle ledit trou est en vis-à-vis de l'empreinte, et la seconde étant une position pour laquelle la bague recouvre partiellement l'empreinte.

5. Dispositif selon l'une des revendications précédentes, caractérisé en ce que la bague de blocage comporte en a périphérie des pattes (10) se terminant par des ergots (11), ces pattes passant dans des trous oblongs (12) en arcs de cercle.

## Patentansprüche

1. Vorrichtung zum schnellen Befestigen eines Stückes auf einer Grundplatte, mit einem an dem Stück (1) gebildeten Bund (5), dessen Kontur von einem Kreis verschieden ist, und einer auf der Grundplatte befestigten oder angeformten Haltezwischenfläche (3), wobei diese Zwischenfläche eine Öffnung (4) für den Durchgang des sich auf einer Seite des Bundes befindlichen Teils des Stückes aufweist, wobei ein Ring (8) zum translatorischen Blockieren des Bundes an der Zwischenfläche befestigt ist und mit dieser in Kontakt steht, wobei der Ring mit einem Loch (9A) mit der gleichen Form und den gleichen Abmessungen wie der Bund durchbohrt ist, wobei die Blockierung durch die begrenzte Drehung des Rings (8) um eine Achse (6) erfolgt, die zur Zwischenfläche senkrecht ist, wobei das Loch sich für eine der möglichen Winkelstellungen des Ringes gegenüber vom Bund befindet, dadurch gekennzeichnet, daß die Öffnung (4) mit einer vertieften Prägung (7) umgeben ist, die in der Seite der Zwischenplatte gebildet ist, durch welche das zu befestigende Stück eingeführt ist, wobei diese Prägung die gleiche Form und die gleichen Abmessungen wie der Bund aufweist.

2. Vorrichtung nach Anspruch 1, dadurch gekennzeichnet, daß der Bund, die Prägung und das Loch eine vieleckige Form aufweisen.

3. Vorrichtung nach Anspruch 2, dadurch gekennzeichnet, daß die vieleckige Form ein Rechteck ist.

4. Vorrichtung nach einem der vorangehenden Ansprüche, dadurch gekennzeichnet, daß der Blockierungsring mit Mitteln (15A, 16A, 17) zusammenwirkt, die eine Drehverriegelung in zwei verschiedenen Winkelstellungen ausführen, wobei die erste diejenige ist, für welche das Loch sich gegenüber der Prägung befindet, und die zweite diejenige ist, für welche der Ring teilweise die Prägung überdeckt.

5. Vorrichtung nach einem der vorangehenden Ansprüche, dadurch gekennzeichnet, daß der Blockierungsring an seinem Umfang Laschen (10) aufweist, die mit Vorsprüngen (11) enden, wobei diese Laschen durch kreisbogenförmige Langlöcher hindurchgehen.

## Claims

1. Device for quickly fastening onto a holding plate an element comprising a flange (5) formed on the element (1) and having an outline other than that of a circle, and an intermediate support surface (3) fastened to or formed on the holding plate, this intermediate surface comprising an opening (4) for the passage of that part of the element which is on one side of the flange, a ring (8) for immobilizing the flange in terms of translation being fastened to the intermediate surface and in contact with it, the ring being pierced with a hole (9A) of the same shape and size as the flange, immobilization being achieved by means of the limited rotation of the ring (8) about an axis (6) perpendicular to the intermediate surface, the hole lying facing the flange for one of the possible angular positions of the ring, characterized in that the opening (4) is surrounded by a recessed impression (7) formed in the face of the intermediate surface via which the element to be fastened is introduced, this impression being the same shape and size as the flange.

2. Device according to Claim 1, characterized in that the flange, the impression and the hole have a polygonal shape.

3. Device according to Claim 2, characterized in that the polygonal shape is a square.

4. Device according to one of the preceding claims, characterized in that the immobilizing ring cooperates with means (15A, 16A, 17) locking in terms of rotation in two different angular positions, the first being the position in which the said hole is facing the impression, and the second being a position in which the ring partially covers the impression.

5. Device according to one of the preceding claims, characterized in that the immobilizing ring has, at its periphery, tabs (10) which end in catches (11), these tabs passing through arc-shaped oblong holes (12).
